# EUROPÄISCHE PATENTSCHRIFT

(11) **EP 3 013 713 B1**
(45) Veröffentlichungstag und Bekanntmachung des Hinweises auf die Patenterteilung: **04.09.2019**
(21) Anmeldenummer: 14734432.9
(22) Anmeldetag: 25.06.2014
(51) Int. Cl.: B65G 1/04, B66F 9/06, B65G 1/137

(54) **LAGER- UND KOMMISSIONIERSYSTEM UND VERFAHREN ZUM KOMMISSIONIEREN MIT AUTONOM VERFAHRBAREN REGALBEDIENGERÄTEN**
STORAGE AND PICKING SYSTEM AND METHOD FOR PICKING WITH AUTONOMOUSLY MOVING SHELF-SERVING DEVICES
SYSTÈME DE STOCKAGE ET DE PRÉPARATION DE COMMANDES ET PROCÉDÉ DE PRÉPARATION DE COMMANDES AU MOYEN DE TRANSSTOCKEURS DÉPLAÇABLES DE MANIÈRE AUTONOME

(30) Priorität: 25.06.2013 DE 102013106640
(43) Veröffentlichungstag der Anmeldung: 04.05.2016
(73) Patentinhaber: SSI Schäfer Automation GmbH, 97232 Giebelstadt (DE); Motum, 2620 Hemiksem (BE)
(72) Erfinder: SWINKELS, Henricus, NL-5804 BA Venray (NL); VAN CAESBROECK, Pieter, B-2620 Hemiksem (BE)
(74) Vertreter: Witte, Weller & Partner Patentanwälte mbB
(86) Internationale Anmeldenummer: PCT/EP2014/063350
(87) Internationale Veröffentlichungsnummer: WO 2014/207021

(56) Entgegenhaltungen:
- EP-A2- 0 302 205
- WO-A1-2011/128384
- JP-A- 2003 020 102

## Beschreibung

Die vorliegende Erfindung betrifft ein Lager- und Kommissioniersystem zum Lagern und Kommissionieren von Artikeln gemäß einem Kommissionierauftrag in Auftragsbehälter, wobei das System autonom verfahrbare Regalbediengeräte (nachfolgend kurz auch "RBG" genannt) aufweist. Ferner wird ein Verfahren zum Kommissionieren von Artikeln mit autonom verfahrbaren RBG offenbart. Die Erfindung arbeitet nach dem Prinzip "Ware-zum-Mann". Ein System gemäß dem Oberbegriff des Anspruchs 1 ist aus der WO 2011/128384 bekannt.

Ein konventionelles Lager- und Kommissioniersystem, das nach dem Prinzip "Ware-zum-Mann" arbeitet, ist in der deutschen Patentanmeldung DE 101 36 354 A1 offenbart. Dort sind in einem Arbeitsbereich zwei Arbeitsplätze zum manuellen Kommissionieren von Artikeln gezeigt, die aus Lagerbehältern entnommen werden und die in Auftragsbehälter abgegeben werden. Die Lagerbehälter werden über eine Lagerbehälter-Fördertechnik transportiert. Die Auftragsbehälter werden über eine Auftragsbehälter-Fördertechnik transportiert. Die Lagerbehälter werden in einem Lagerbereich in Regalen gepuffert. Zwischen den Regalen sind Regalgassen ausgebildet. In den Regalgassen bewegt sich auf jeder Regalebene zum Ein- und Auslagern der Lagerbehälter ein Shuttle. Ein Lagerbehälter-Vertikalförderer schließt sich stirnseitig an jede Regalgasse an, um die Lagerbehälter in der vertikalen Richtung zu transportieren. Die Shuttle transportieren die Behälter in der horizontalen Richtung. Somit sind der horizontale und vertikale Transport der Lagerbehälter voneinander entkoppelt. Zwischen den Regalen und den Arbeitsplätzen ist in einem Transportbereich eine sog. Fördertechnik-Vorzone angeordnet. Die Vorzone schließt an die Lagerbehälter-Senkrechtförderer an und verbindet materialflusstechnisch die Arbeitsplätze mit den Regalen.

In der internationalen Patentanmeldung WO 2011/128384 A1, welche ein Lager- und Kommissioniersystem nach dem Oberbegriff des Anspruchs 1 offenbart, wird ein Shuttle-System offenbart, das ähnlich zu dem System der DE 101 36 354 A1 aufgebaut ist. Das Shuttle-System der WO 2011/128384 A1 unterscheidet sich aber dadurch, dass die Shuttle nicht nur innerhalb einer jeweiligen Regalgasse auf ihrer jeweiligen Regalebene verfahrbar sind, sondern dass die Shuttle auch außerhalb der Regale zum Transport der Lagerbehälter einsetzbar sind. Außerhalb der Regale, d.h. außerhalb der Regalgassen, können die Shuttle mittels einer Navigationseinheit frei (d.h. autonom) fahren. Die oben erwähnte klassische Fördertechnik-Vorzone existiert nicht mehr. Die Vorzone wird durch die frei verfahrbaren Shuttle ersetzt.

Sowohl die Shuttle der DE 101 36 354 A1 als auch die Shuttle der WO 2011/128384 A1 weisen jeweils ein Lastaufnahmemittel (nachfolgend auch kurz "LAM" bezeichnet) auf, das die Lagerbehälter senkrecht zur Fahrrichtung ein- und auslagert. Die Ein- und Auslagerung erfolgt also in einer Querrichtung der Regale, während sich die Shuttle, zumindest innerhalb der Regalgassen, in einer Längsrichtung der Regale bewegen. Während eines der Shuttle einen Lagerbehälter ein- oder auslagert, kann dieses Shuttle von keinem anderen Shuttle (innerhalb der Regalgasse) überholt werden. Eine Sequenzierung, d.h. Reihenfolgenbildung, ist erst außerhalb der Regalgasse möglich. Die Shuttle verfügen über keine Hubfunktion, so dass die Shuttle mittels eines Shuttle-Vertikalförderers auf eine geeignete Höhe verbracht werden müssen, um bspw. die Lagerbehälter an Arbeitsplätzen zwecks Entnahme von Artikeln andienen zu können. Innerhalb der Regalbereiche sind also Senkrechtförderer für die Shuttle oder die Lagerbehälter vorzusehen, um Höhendifferenzen zu überwinden.

In dem Patent US 7,991,505 B2 wird ein Shuttle-System vorgeschlagen, das ohne Senkrechtförderer für die Lagerbehälter und/oder Shuttle auskommt. Das Shuttle-System der US 7,991,505 B2 nutzt geneigte Rampen, um die Shuttle auf eine gewünschte Regalebene zu bringen. Das Shuttle fährt die Rampen (mechanisch geführt) hinauf oder hinab. Das Shuttle der US 7,991,505 B2 weist ebenfalls keine eigene Hubfunktion auf. Das LAM weist kammartig angeordnete Zinken auf, die mit entsprechend komplementär ausgebildeten Rippen der Fachböden der Regale wechselwirken. Die Zinken können in Zwischenräume zwischen den Rippen eindringen und anschließend angehoben werden, um einen Artikel auszulagern. Auch hier erfolgt das Einlagern und Auslagern in der Querrichtung. Die Shuttle können sich wieder nicht überholen, da sie mechanisch zwangsgeführt sind, z. B. durch Nut-Feder-Führungen im Boden.

In dem europäischen Patent EP 2 044 494 B1 wird ein weiterer Ansatz beschrieben, bei dem ganze Regale mittels Shuttle aus einem Lagerbereich in einen Kommissionier- bzw. Arbeitsbereich verbracht werden, wo Artikel manuell entnommen und in Auftragsbehälter (z.B. Kartons) abgegeben werden. Die Shuttle sind eingerichtet, auf dem Boden zu fahren und die Regale mittels eines entsprechenden Hubmechanismus auf ihren Rücken zu tragen. Das System ermöglicht eine flächendynamische Lageranordnung, weil die Regale mit einer kleinen Grundfläche ausgebildet sind und im Lagerbereich zu größeren Regalen angeordnet und aber auch umgesetzt werden können. Da die Regale nicht artikelrein bestückt sind, kann es vorkommen, dass ein und dasselbe Regal an zwei unterschiedlichen Arbeitsplätzen benötigt wird, weil dieses Regal zwei unterschiedliche Artikeltypen enthält, von denen jeweils einer an einem der Arbeitsplätze benötigt wird. Um diesem Problem entgegenzutreten, werden sehr viele Regale eingesetzt, so dass sich ein (Lager-)Flächenbedarf erhöht. Mit der Anzahl der Regale steigt auch die Anzahl der benötigten Shuttle. Dies wiederum resultiert in einem größeren Navigations- und Fahrwegreservierungsaufwand für die Shuttle. Dies versucht die EP 2 044 494 B1 dadurch zu lösen, dass die Fläche des Systems in ein rasterförmiges Gitter unterteilt wird, das eine Vielzahl von regelmäßig angeordneten (Einheits-)Zellen aufweist. Diese Zellen werden zur Anordnung der Regale sowie zum Zwecke der Navigation und der Routenreservierung genutzt. Die Shuttle der EP 2 044 494 B1 weisen zwar eine Hubfunktion auf, aber nur für die Regale und nicht für die in den Regalen befindlichen Artikel.

Die Dokumente JP 2003 020102 A und EP 0 302 205 A2 offenbaren fahrerlose Förderfahrzeuge.

Es ist daher eine Aufgabe der vorliegenden Erfindung, ein verbessertes System zum Kommissionieren von Artikeln nach dem Prinzip "Ware-zum-Mann" bereitzustellen, das effizienter ist, eine kleinere Fläche benötigt und ergonomisch ist.

Diese Aufgabe wird gelöst durch ein Lager- und Kommissioniersystem der eingangs erwähnten Art, wobei jedes der Regalbediengeräte ferner aufweist: ein Lastaufnahmemittel, das angepasst ist, mindestens einen der Lagerbehälter und/oder mindestens einen der Artikel in einer Fahrtrichtung des Regalbediengeräts aus einem der Lagerplätze auszulagern oder in einen der Lagerplätze einzulagern; eine bodennahe Fahreinheit mit einem Fahrwerk und mit einem Antrieb; mindestens einen Sensor zum Erfassen der Marker, die einen Fahrweg definieren, entlang dem das Regalbediengerät in der Fahrtrichtung verfahrbar ist; und einer Steuerrichtung, die in die Fahreinheit integriert ist; und wobei die Steuereinrichtung eingerichtet ist, das Regalbediengerät autonom innerhalb jeder der Zonen und zwischen den Zonen entlang eines frei wählbaren Fahrwegs in der Fahrrichtung zu verfahren, wobei die Fahreinheit, der Mast und die das Lastaufnahmemittel so relativ zueinander angeordnet sind, dass die Fahreinheit eines der Regale im Wesentlichen vollständig unterfährt und dass der Mast außerhalb des einen Regals verbleibt, während sich das Lastaufnahmemittel zwecks einer Einlagerung oder Auslagerung im Wesentlichen vollständig innerhalb des einen Regals befindet.

Mit der vorliegenden Erfindung lassen sich die klassische Fördertechnik-Vorzone sowie die gassengeführten RBG durch eine Vielzahl von autonom verfahrbaren "Mini"-RBG ersetzen. Diese Mini-RBG sind nicht gassengebunden. Die vertikale Bewegungsrichtung wird über das entlang des Masts bewegliche Lastaufnahmemittel realisiert. Shuttle-Lift innerhalb des Lagers bzw. Regals werden nicht benötigt. Es wird nach dem Prinzip "Ware-zu-Mann" kommissioniert. Das Konzept der klassischen Behälterkommissionierung ist weiterhin anwendbar, wobei sich die Sequenzierungsmöglichkeiten erhöht haben.

Die Regalanordnung ist frei skalierbar. Die Regalanordnung erfolgt "flächendynamisch". Dies bedeutet, dass größere Regalkomplexe durch Zusammenfassen einer Vielzahl kleiner Einheitsregale geschaffen werden können, wobei eine relative Position eines der Einzelregale innerhalb einer Regalgruppe jederzeit änderbar ist. Auch eine Orientierung (z.B. Ost-West-Ausrichtung, Nord-Süd-Ausrichtung, L-förmige Ausrichtung, etc.) der Regale lässt sich innerhalb kürzester Zeit (Zeiteinheit:Stunden) ändern.

Der Materialfluss erfolgt aber nicht durch den Transport der Regale selbst, sondern gemäß den Gesetzmäßigkeiten der klassischen Behälterkommissionierung, d.h. die Behälter werden transportiert.

Die bei der Erfindung eingesetzten RBG ermöglichen eine ergonomische Andienung der Behälter. Die RBG sind mit konventionellen Shuttle vergleichbar, weisen aber zusätzlich einen Mast auf, der die ergonomische Andienung der Behälter in einer gewünschten Höhe ermöglicht. Dem Kommissionierer wird (ausschließlich) der benötigte Artikel angedient, nicht aber das vollständige Regal mit einer Vielzahl unterschiedlicher Artikel, wobei ein Großteil der Artikel nicht zur Kommissionierung benötigt wird. Eine Ausrichtung der Regale am Kommissionier-Arbeitsplatz entfällt, da nur die Lagerbehälter zum Kommissionier-Arbeitsplatz transportiert werden. Die vorliegende Erfindung vereint die Vorteile (z.B. Batch-Picking) der klassischen Behälterkommissionierung, bei der gassengeführte RBG und Fördertechnik-Vorzonen zum Einsatz kommen, mit den Vorteilen (hohe Flexibilität, flächendynamische Regalanordnung etc.) der Regalkommissionierung, wie sie im Patent EP 2 044 494 B1 beschrieben ist. Die mit diesen bekannten Konzepten verbundenen Nachteile werden aber vermieden. So sind bspw. die Investitionskosten geringer.

Erfinugsgemäß sind die Fahreinheit, der Mast und die das Lastaufnahmemittel so relativ zueinander angeordnet, dass die Fahreinheit eines der Regale im Wesentlichen vollständig unterfährt und dass der Mast außerhalb des einen Regals verbleibt, während sich das Lastaufnahmemittel zwecks einer Einlagerung oder Auslagerung im Wesentlichen vollständig innerhalb des einen Regals befindet.

Die Unterfahrbarkeit der Regale ermöglicht es, dass sich die RBG gegenseitig innerhalb einer Regalgasse überholen können. Durch das Überholen ist es möglich, eine Reihenfolge zu ändern, in der die Lagerbehälter aus einer Regalgasse ausgelagert werden. Dies stellt eine potenzielle Sequenzierungsstufe dar.

Eine weitere Sequenzierungsstufe wird durch die autonome Verfahrbarkeit der RBG repräsentiert. Die RBG können sich auf ihren Fahrwegen zwischen der Lager-Zone und der Arbeits-Zone überholen. Die RBG können sich im Bereich der Arbeits-Zone zwischen bereits wartende RBG positionieren und so die Reihenfolge ändern, in der die Lagerbehälter an einem Kommissionier-Arbeitsplatz angedient werden. Die wartenden RBG können Lücken zwischen sich schaffen, um ein neu aufzunehmendes RBG, das die Reihenfolge ändert, zwischen sich aufzunehmen. Dies alles sind Maßnahmen, um die Reihenfolge zu ändern (Sequenzierungsstufen).

Bei einer besonderen Ausgestaltung ist der Mast in einem äußeren Randbereich der Fahreinheit angeordnet, insbesondere außen an der Fahreinheit angebracht ist.

Der Mast kann als Anschlag für das in ein Regal einfahrende RBG dienen. Sobald das RBG das Regal ausreichend weit unterfahren hat, stößt der Mast entweder an ein Horizontalelement des Regals oder an einen der frontseitig gelagerten Lagerbehälter.

Insbesondere ist ferner eine Fahr-Zone vorgesehen, die die Lager-Zone mit der Arbeits-Zone verbindet.

Die Fahr-Zone repräsentiert einen Raum, in welchem sich die RBG überholen dürfen. In der Fahr-Zone können Schnellfahr-Bereiche und Langsamfahr-Bereiche definiert werden. Es können Einbahnstraßen-Bereiche definiert werden. All dies dient einer besseren Regelung des RBG-Verkehrs.

Bei einer vorteilhaften Ausführungsform sind die Zonen in ein Zellenraster unterteilt, das eine flächendeckende regelmäßige Anordnung von, vorzugsweise rechteckigen, Zellen, insbesondere Einheitszellen, bildet, wobei die Regale entlang des Zellenrasters angeordnet und ausgerichtet sind.

Das Zellenraster kann zur Bestimmung von Fahrwegen (Routen) eingesetzt werden. Die Regalordnung kann sich am Zellenraster orientieren. Eine Grundfläche der Regale kann sich an einer Grundfläche einer (Einheits-)Zelle orientieren. Das Zellraster vereinfacht die Planung des Systems. Das Zellenraster stellt ein systemeigenes Referenzsystem dar.

Die Arbeits-Zone weist insbesondere eine Auftragsbehälter-Fördertechnik auf, die mit dem oder den Arbeitsplätzen verbunden ist.

Die Auftrags-Ladehilfsmittel bzw. Auftragsbehälter werden über die Auftragsbehälter-Fördertechnik zu den Arbeitsplätzen hin und von den Arbeitsplätzen weg transportiert. Die Auftragsbehälter-Fördertechnik versorgt die Arbeitsplätze mit Auftragsbehältern.

Weiter ist es von Vorteil, wenn jedes der Regale unterfahrbar und transportabel ausgebildet ist.

Die Unterfahrbarkeit der Regale ermöglicht es, dass sich die RBG innerhalb einer Regalgasse überholen können. Die Ausgestaltung der Regale derart, dass sie durch die RBG transportabel sind, ermöglicht die flächendynamische Regalanordnung, die oben bereits erwähnt wurde.

Vorzugsweise ist jedes der Regale eingerichtet, mittels des Lastaufnahmemittels angehoben und transportiert zu werden.

Es wird kein anderes Fahrzeug benötigt, um die Regale innerhalb des Systems umzusetzen. Es wird lediglich ein einziges Fahrzeug benötigt, um sowohl den Behälter-Materialfluss als auch einen Regal-Materialfluss abzubilden. Dieses Fahrzeug wird durch das RBG implementiert.

Bei einer anderen Ausgestaltung weist die Fahreinheit eine Hubplattform auf, die mit einem weiteren Hubwerk verbunden ist, um jedes der Regale innerhalb der Lager-Zone durch Anheben und Absetzen von einer ersten Position an eine zweiten Position umzusetzen.

Da das LAM des RBG üblicherweise zum Ein- und Auslagern der Lagerbehälter ausgebildet ist, die eine gewisse Tragfähigkeit aufweisen, und da die Regale üblicherweise mehrere Lagerbehälter aufnehmen können, kann es empfehlenswert sein, eine weitere Hubplattform vorzusehen, mit der ganze Regale, insbesondere gefüllte Regale, umgesetzt werden können.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: ein Blockdiagramm eines Lager- und Kommissioniersystems der Erfindung;
- Fig. 2: ein Block- und Funktionsdiagramm eines RBG;
- Fig. 3: eine perspektivische Ansicht eines Regals mit Lagerbehältern;
- Fig. 4: eine perspektivische Ansicht eines RBG mit einem Lagerbehälter;
- Fig. 5: eine perspektivische Ansicht mehrerer Regale, wobei das RBG der Fig. 4 einen Lagerbehälter ein- oder auslagert;
- Fig. 6: einen perspektivischen Blick in eine Regalgasse, wo ein RBG sich dreht;
- Fig. 7: einen perspektivischen Blick in die Regalgasse der Fig. 6, wenn das RBG innerhalb der Regalgasse fährt;
- Fig. 8: eine perspektivische Ansicht auf eine Lager-Zone, die an eine Fahr-Zone und eine Arbeits-Zone angrenzt;
- Fig. 9: eine Draufsicht auf einen Teil einer Lager-Zone; und
- Fig. 10: eine Frontalansicht eines schematisch dargestellten Regals, das von einem RBG unterfahren wird.

Unter dem Begriff "Kommissionieren" wird nachfolgend das Zusammenstellen von Artikeln, Stücktütern, Packeinheiten, Gebinden (cases), etc. zu einem (Kommissionier-)Auftrag verstanden. Ziel des Kommissionierens ist es, aus einer Gesamtmenge von Gütern (Sortiment) Teilmenge aufgrund von Anforderungen (Aufträgen) zusammenzustellen. Beim Kommissionieren wird entnommen und abgegeben. Ein Auftrag besteht aus einer oder mehreren Auftragspositionen, die auch als Auftragszeilen bezeichnet werden. Eine Auftragszeile gibt eine jeweilige Menge eines Artikels (Typ und Anzahl) an. Eine "Auftrags-Batch" ist eine Zusammenfassung mehrerer Aufträge zu einem Verarbeitungslos. Eine "Batch" ist also eine Zusammenfassung von mehreren Aufträgen zu einer geordneten Menge oder Liste von Aufträgen.

Unter einem "Artikel" wird nachfolgend eine Handhabungseinheit innerhalb des Systems der Erfindung verstanden. Ein Artikel ist durch einen Artikeltyp unterscheidbar. Ein Artikel stellt eine kleinste Einheit des Artikelsortiments dar. Es kann sich um Stückgüter und/oder Gebinde (cases) handeln. Stückgüter sind individualisierte, unterscheidbare Güter, die einzig gehandhabt werden können und deren Bestand stückweise oder als Gebinde geführt wird. Das Gebinde ist ein allgemeiner Begriff für eine einzeln handhabbare Einheit, die manuell oder mittel technischen Geräts (Fördertechnik) bewegt werden kann und die eine feste definierte Anzahl von Stückgütern umfasst. Im Nachfolgenden werden die Begriffe Artikel, Gebinde, Packeinheit und Stückgut äquivalent verwendet.

Bei der vorliegenden Erfindung kann grundsätzlich jede Art von Fördertechnik (z.B. Rollenförderer, Gurtförderer, Kettenförderer, etc.) eingesetzt werden. Die Begriff "Förderer" und "Fördertechnik" sind äquivalent zu verstehen. Eine Fördertechnik umfasst im Wesentlichen alle technischen und organisatorischen Einrichtungen zum Bewegen oder Transportieren von Fördergütern (Artikeln) und/oder Ladehilfsmittel.

Die vorliegende Erfindung arbeitet nach dem Prinzip "Ware-zum-Mann" bzw. "Ware-zum-Roboter". Die Artikel werden in sog. "Auftragsladehilfsmittel" abgelegt, die nachfolgend exemplarisch in Form von Auftragsbehältern beschrieben werden. Die Artikel werden entweder mit Ladehilfsmitteln oder ohne Ladehilfsmittel zu einem Kommissionier-Arbeitsplatz transportiert, wo eine Entnahme erfolgt. Nachfolgend werden exemplarisch "Lagerbehälter" als Ladehilfsmittel beschrieben. Die Artikel werden in den Lagerbehältern (vorübergehend) bevorratet, bevor sie zwecks Kommissionierung entnommen und in die Auftragsbehälter abgegeben werden. Es versteht sich, dass die Auftragsbehälter ebenfalls in Form von Ladehilfsmitteln (z.B. Behälter, Kartons, Rollcontainer, Tablare, etc.) implementiert sein können.

Unter einem RBG wird nachfolgend ein Förderzeug verstanden, das üblicherweise in Regalgassen zwischen zwei Regalen verfahrbar ist. Üblicherweise weist ein RBG ein Fahrwerk, einen Mast, ein Hubwerk sowie mindestens ein Lastaufnahmemittel (nachfolgend auch kurz "LAM" genannt) auf. Das LAM dient zur Handhabung der Artikel oder der Lagerbehälter. Im vorliegenden Fall handelt es sich insbesondere um einen z.B. C-oder U-förmigen Greifer. Das RBG ist autonom verfahrbar, d.h. sein Fahrweg ist frei wählbar und jederzeit veränderbar. Das RBG ist eigenständig, eigenverantwortlich und/oder unabhängig verfahrbar.

Eine Regalanordnung (z.B. ein Regallager) umfasst eine Vielzahl von Regalen, die in Form von Einzelregalen oder Doppelregalen vorgesehen sind. Doppelregale sind Einzelregale, die Rücken an Rücken aufgestellt sind. Zwischen den Regalen sind die Regalgassen definiert, die in einer Längsrichtung der Regale verlaufen und als Aktionsraum für die RBG dienen. Die Regale enden an ihren, sich jeweils gegenüberliegenden Stirnseiten, die in einer Ebene senkrecht zur Längsrichtung der Regalgasse orientiert sind. Die Regale selbst weisen eine Vielzahl von (Regal-)Lagerplätzen auf, die in übereinanderliegenden Regalebenen angeordnet sind. Eine Regalspalte erstreckt sich in einer vertikalen Richtung innerhalb eines Regals und weist üblicherweise so viele Lagerplätze übereinander auf, wie Regalebenen vorhanden sind.

Unter einem Fahrzeug (Shuttle) wird nachfolgend ein Regalbediengerät verstanden, das im Wesentlichen eine (einzige) Regalebene in der Regalquerrichtung bedient, um die Lagerplätze dieser Regalebene mit Lagereinheiten (Lagerbehältern) zu versorgen, d.h. Lagereinheiten ein- und auszulagern.

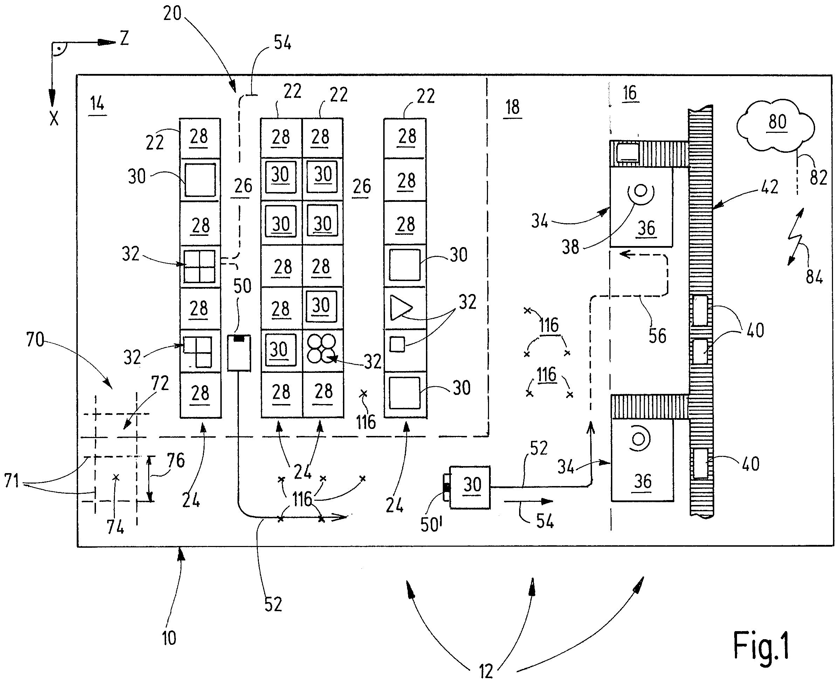

Fig. 1 zeigt ein Blockdiagramm eines Lager- und Kommissioniersystems 10 der Erfindung. Das System 10 weist mehrere benachbarte Zonen 12 auf. Im vorliegenden Fall weist das System 10 eine Lager-Zone 14, eine Arbeits-Zone 16 sowie eine Fahr-Zone 18 auf. Die Lager-Zone 14 ist über die Fahr-Zone 18 mit der Arbeits-Zone 16 verbunden.

In der Lager-Zone 14 ist eine Lager- oder Regalanordnung 20 angeordnet. Die Regalanordnung 20 weist eine Vielzahl von Regalen 22 auf, die hier exemplarisch in (Regal-)Reihen 24 angeordnet sind. In der Fig. 1 sind exemplarisch vier Regalreihen 24 gezeigt. Die linke Regalreihe 24 weist sieben zellenartige Regale 22 auf, die in einer Längsrichtung X des Systems 10 hintereinander aufgereiht sind. Bei der linken Regalreihe 24 handelt es sich um ein "Einzelregal" im oben genannten Sinne. Die beiden mittleren Regalreihen 24 stellen ein "Doppelregal" im oben genannten Sinne dar. Die beiden mittleren Reihen 24 stehen Rücken an Rücken. Jede der mittleren Reihen 24 weist wiederum sieben Regale 22 auf, die in der Längsrichtung X aufgereiht sind. Schließlich ist eine weitere Regalreihe 24 in Form eines Einzelregals im rechten Bereich der Regalanordnung 20 gezeigt. Zwischen der ersten und der zweiten Regalreihe 24 erstreckt sich eine erste Regalgasse 26 in der Längsrichtung X. Zwischen der dritten und der vierten Regalreihe 24 erstreckt sich eine zweite Regalgasse 26 in der Längsrichtung X. Die Regale 22 und die Reihen 24 sind vorzugsweise parallel zueinander angeordnet. Die Regalgassen 26 sind vorzugsweise parallel zueinander angeordnet.

Jedes der Regale 22 weist zumindest eine Regalebene mit einem Lagerplatz 28 auf. Die in der Fig. 1 gezeigten Regale 22 weisen jeweils eine Vielzahl von Lagerplätzen 28 auf, die (ausschließlich) übereinander angeordnet sind und sich somit vertikal entlang einer Höhenrichtung Y erstrecken. In der ersten Regalreihe 24, die in der Fig. 1 links angeordnet ist, sind vier der Lagerplätze 28 frei. Dies sind der erste, dritte, fünfte und siebte Lagerplatz 28. Die anderen Lagerplätze 28 sind belegt. Der zweite Lagerplatz 28 ist mit einem Lagerbehälter 30 belegt, der einen oder mehrere Artikel 32 bevorraten kann. Der vierte Lagerplatz 28 ist mit (anderen) Artikeln 32 bestückt, und zwar ohne einen Ladungsträger (Lagerbehälter). Eine derartige ladungsträger- bzw. ladehilfsmittellose Lagerung ist in der deutschen Patentanmeldung DE 10 2010 054 968 A1 offenbart, auf die hier Bezug genommen wird.

Die mittleren Regalreihen 24 sowie die rechte Regalreihe 24 sind ebenfalls nicht vollständig bestückt. Es versteht sich, dass die Regale 22 mit Ladungsträgern, ohne Ladungsträger und gemischt bestückbar sind. Wenn die Regale 22 ohne Ladungsträger bestückt werden, so verfügen sie üblicherweise über kammartig ausgebildete Fachböden (nicht gezeigt). Es sind unterschiedliche Artikel, Packeinheiten bzw. Gebinde 32 abgedeutet (Quadrate, Kreise, Dreiecke, etc.). Die Lagerplätze 28 sind üblicherweise sorten- bzw. typenrein bestückt. Die Lagerplätze 28 können mit einem oder mehreren der Artikel 32 bestückt sein.

Die Arbeits-Zone 16 ist in der Fig. 1 rechts dargestellt, wohingegen die Lager-Zone 14 links dargestellt ist. Die Arbeits-Zone 16 weist einen oder mehrere Arbeitsplätze 34, insbesondere Kommissionier-Arbeitsplätze 36, auf. In der Arbeits-Zone 16 findet die Kommissionierung (Entnahme und Abgabe der Artikel 32) statt. Im Beispiel der Fig. 1 werden die Kommissionier-Arbeitsplätze 36 manuell durch Kommissionierer 38 betrieben. Die Kommissionier-Arbeitsplätze 36 sind eingerichtet, die Artikel 32 aus den Lagerbehältern 30 zu entnehmen und in Auftragsbehälter 40 abzugeben. Die Auftragsbehälter 40 können über eine Auftragsbehälter-Fördertechnik 42 (z.B. Rollenförderer, Gurtförderer, etc.) angedient und abgeholt werden. In der Fig. 1 ist eine Hauptstrecke gezeigt, die sich in der Längsrichtung X erstreckt. Von der Hauptstrecke zweigen in der Querrichtung Z Zweigstrecken ab, die die Kommissionier-Arbeitsplätze 36 mit der Hauptstrecke der Auftragsbehälter-Fördertechnik 42 verbinden. An den Schnittpunkten können Manipulationseinrichtungen (z.B. Schieber, Riemenheber, etc.) vorgesehen sein, um die Auftragsbehälter 40 zwischen den verschiedenen Strecken umzusetzen. Es versteht sich, dass die Auftragsbehälter-Fördertechnik 42 vorzugsweise angetrieben ausgebildet ist. Die Zweigstrecken der Auftragsbehälter-Fördertechnik 42 reichen vorzugsweise in einen Bereich der Kommissionier-Arbeitsplätze 36 hinein, so dass der Kommissionierer 38 so wenig wie möglich laufen muss. Sowohl die Auftragsbehälter 40 als auch die Lagerbehälter 30 werden vorzugsweise in einer ergonomischen Höhe angedient, die von einer Hüfthöhe bis zu einer Brusthöhe des Kommissionierers 38 reicht.

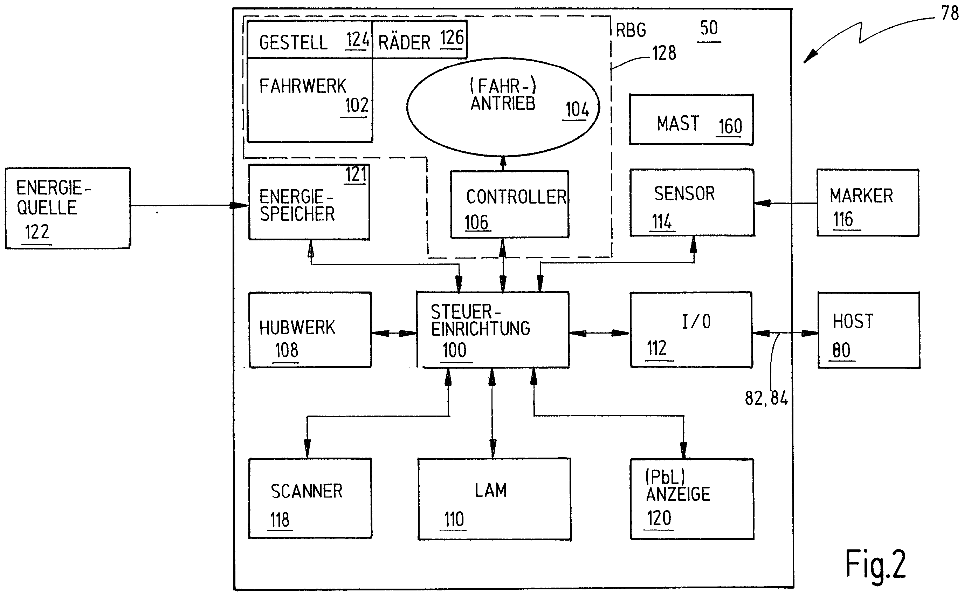

Die Lagerbehälter 30, oder die Artikel 32, werden mittels autonom verfahrbaren RBG 50 innerhalb des Systems 10 bewegt. Die RBG 50 werden unter Bezugnahme auf Fig. 2 noch genauer beschrieben werden. Die RBG 50 sind eingerichtet, die Lagerbehälter 30 und/oder die Artikel 32 in die Regale 22 einzulagern oder aus den Regalen 22 auszulagern. Sowohl die Einlagerung als auch die Auslagerung erfolgt in einer Fahrtrichtung 54, die parallel zu einem Fahrweg 52 des RBG 50 orientiert ist. Die Ein- und Auslagerung erfolgt also nicht in einer Querrichtung, sondern parallel zur Fahrtrichtung 54. Zu diesem Zweck sind die RBG 50 ausgebildet, unter die Regale 22 gefahren zu werden.

In der Fig. 1 sind exemplarisch zwei RBG 50 und 50' gezeigt. Die RBG 50 und 50' werden entlang der Fahrwege 52 verfahren. Das Bezugszeichen 56 verdeutlicht einen möglichen Fahrweg des RBG 50'. Der Fahrweg 56 kann an dem unteren Kommissionier-Arbeitsplatz 36 vorbeiführen. Dort kann das RBG 50' zeitweise verweilen, um eine Entnahme der Artikel 32 zu ermöglichen. Danach kann der (zukünftige) Fahrweg 56 aus der Fahr-Zone 18 in die Arbeits-Zone 16 führen, um den oberen Kommissionier-Arbeitsplatz 36 zu versorgen. Auch dort kann das RBG 50' zeitweise verweilen, um es dem Kommissionierer 38 zu ermöglichen, die Artikel 32 zu entnehmen und in die Auftragsbehälter 40 zu geben. Es versteht sich, dass die Artikel 32 nicht unmittelbar in die Auftragsbehälter 40 gegeben werden müssen. Die Artikel 32 können auch alternativ direkt auf die Fördertechnik 42 aufgelegt werden, um später an einem anderen Ort (z.B. Versand) in die Auftragsbehälter 40 (Kartons) gegeben zu werden.

Die RBG 50 bewegen sich fortlaufend innerhalb des Systems 10, um einen Materialfluss zwischen den verschiedenen Zonen 12 zu ermöglichen. Vorzugsweise sind Einbahnstraßen-Regeln definiert, so dass sich die Fahrwege 52 der RBG 50 so wenig wie möglich kreuzen. In der Fig. 1 erfolgt der Materialfluss vorzugsweise gegen den Uhrzeigersinn, so dass die RBG 50 in der positiven Längsrichtung X durch die Regalgassen 26 verfahren werden.

Ferner ist in Fig. 1 ein Zellenraster 70 mittels horizontaler und vertikaler Hilfslinien 71 in der linken unteren Ecke des Systems 10 angedeutet. Das Zellenraster 70 kann aus einer Vielzahl von, vorzugsweise einheitlichen, Zellen 72 aufgebaut sein. Die Zellen 72 können flächendeckend und regelmäßig angeordnet sein. Die Zellen 72 sind vorzugsweise rechteckig und insbesondere quadratisch. Eine Rasterweite 76 entspricht dann einer Zellenbreite bzw. -länge. Die Regale 22 sind entlang des Zellenrasters 70 angeordnet, ausgerichtet und vorzugsweise entsprechend dimensioniert. Mittelpunkte 74 der Zellen 72 können genutzt werden, um Marker 116 auf einem Hallenboden zu platzieren. In der Fig. 1 sind einige der Marker 116 exemplarisch gezeigt. Die RBG 50 können sich entlang der Marker 116 innerhalb des Systems 10 orientieren und so ihre Fahrwege 52 festlegen und verfolgen. Alternativ können auch andere Führungssysteme (z.B. Schienen) oder Orientierungssysteme (z.B. GPS) verwendet werden.

Fig. 2 zeigt ein Blockdiagramm 78 zur Verdeutlichung der Funktionen verschiedener Komponenten des RBG 50.

Das RBG 50 kann mit einem Zentralrechner 80 kommunizieren, der in der Fig. 1 in Form einer Wolke angedeutet ist. Die Kommunikation kann über Festleitungen 82 oder drahtlos (vgl. Pfeil 84) erfolgen.

Das RBG 50 der Fig. 2 weist eine (zentrale) Steuereinrichtung 100 ein Fahrwerk 102, einen (Fahr-)Antrieb 104, einen (Fahr-)Controller 106, ein Hubwerk 108, ein LAM 110 sowie eine Kommunikationsschnittstelle 112 auf. Ferner sind ein oder mehrere Sensoren 114 vorgesehen. Die Sensoren 114 dienen z.B. zur Erfassung der Marker 116 oder zur Kollisionsvermeidung. Bei den Markern 116 kann es sich z.B. um Strichcodes handeln, die auf den Boden geklebt sind. In diesem Fall können die Sensoren 114 z.B. in Form von Scannern oder Zeilenkameras implementiert sein. Die Marker 116 können, u.a., auch als im Boden mittels Dübel verankerte RFID-Tags implementiert sein.

Das RBG 50 kann ferner weitere Scanner 118 (Sensoren) aufweisen, um Kennungen der Regale 22, der Lagerbehälter 30, der Artikel 32, der Arbeitsplätze 34, anderer RBG 50 oder andere Kennungen zu lesen. Diese Kennungen kann der Scanner 118 an die Steuereinrichtung 100 kommunizieren. Die Steuereinrichtung 100 kann den Scanner 118 auffordern, Kennungen zu lesen. Die entsprechenden Kommunikationswege sind in der Fig. 2 durch Einfach- oder Doppelpfeile angedeutet.

Optional kann das RBG 50 eine Anzeigeeinrichtung 120 aufweisen, wie z.B. eine Pick-by-Light-(PBL-) Anzeige.

Das RBG 50 weist ferner einen Energiespeicher 121 auf, der (schnell) über (externe) Energiequellen 122 aufgeladen werden kann. Die externen Energiequellen 122 sind vorzugsweise an solchen Orten des Systems 10 angeordnet, wo die RBG 50 vorrübergehend stillstehen, d.h. nicht fahren, z.B. unter der Regalanordnung 20 oder bei den Arbeitsplätzen 34. Die RBG 50 sind (kurzzeitig) stationär, während ein- oder ausgelagert wird, das LAM 110 sich vertikal bewegt und das RBG 50 unter eines der Regale 22 gefahren ist. Weiter sind die RBG 50 im Bereich der Arbeitsplätze 34 in Ruhe, während der Kommissionierer 38 die Artikel 32 entnimmt. Somit sind die externen Energiequellen 122 vorzugsweise im Bereich der Regale 22, insbesondere unterhalb der Regale 22, und rund um die Arbeitsplätze 34 angeordnet. Eine Energieübertragung kann z.B. drahtlos, berührungslos, induktiv oder per Schleifleitung erfolgen. Bei den Energiespeichern 121 kann es sich z.B. um Kondensatoren (Powercaps), Batterien oder Ähnliches handeln, die durch entsprechende elektromagnetische Felder aufgeladen werden, während die Lagerbehälter 30 und/oder die Artikel 32 ein- und ausgelagert oder entnommen werden.

Das Fahrwerk 102 (Chassis) ist Teil einer sog. Fahreinheit 128, die in der Fig. 2 mit einer Strichlinie umrandet ist. Die Fahreinheit 128 kann ein Gestell (Rahmen) 124, Räder 126, den Antrieb 104/oder den Controller 106 aufweisen.

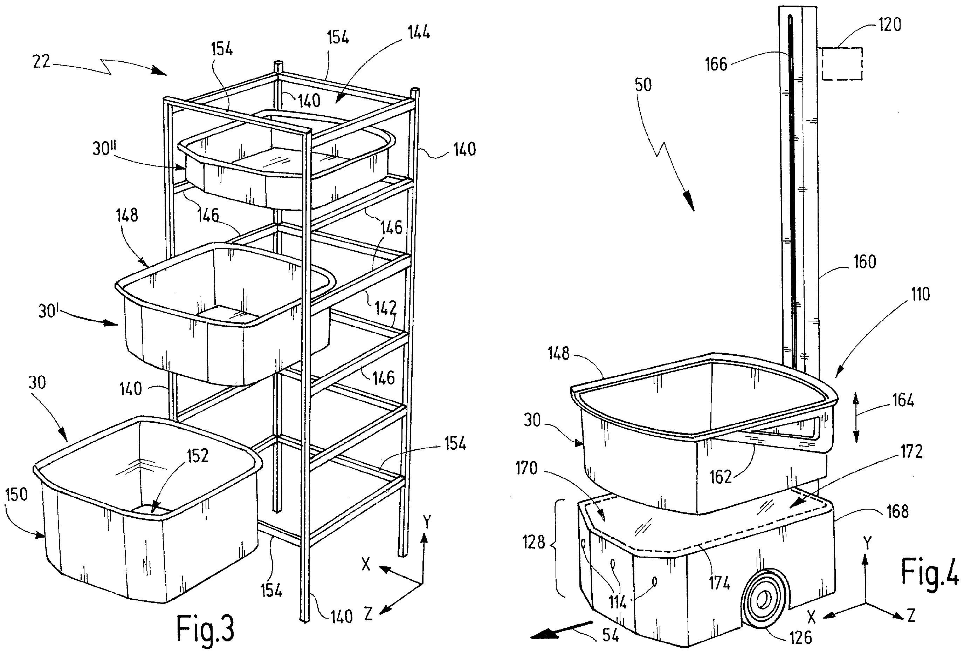

Das Hubwerk 108 weist einen Antrieb auf, um das LAM 110 in einer vertikalen Richtung entlang eines Masts 160 (vgl. Fig. 4) auf und ab zu bewegen. Das Hubwerk 108 umfasst ferner Zugmittel, die den Hubantrieb mit dem LAM 110 verbinden.

Bezug nehmend auf Fig. 3 ist eine perspektivische Ansicht eines (Einheit-)Regals 22 gezeigt, das zur Bildung der Regalreihen 24 der Fig. 1 einsetzbar ist. Das Regal 22 der Fig. 3 weist Vertikalelemente 140 (Regalsteher, Pfosten, etc.) sowie Horizontalelemente 142 (Streben) auf, die die Vertikalelemente 140 miteinander verbinden. Die Vertikalelemente 140 und die Horizontalelemente 142 bilden einen Regalbau, der vorzugsweise aus Metall hergestellt ist. Die Horizontalelemente 142 dienen zur Verstärkung und Versteifung des Regals 22. Der Regalbau repräsentiert ein Regalgestell 144. Das Regalgestell 144 weist hier eine vorzugsweise quadratische Grundfläche auf, die nicht näher bezeichnet ist. Das Gestell 144 ist zumindest an einer Seite (Seite in der positiven X-Richtung) offen ausgebildet, um die Lagerbehälter 30 ein- und auslagern zu können. Das Gestell 144 kann ferner Auflagewinkel 146 aufweisen, die zur Aufnahme eines übertragenen Rands 148 der Lagerbehälter 30 eingerichtet sind. Vorzugsweise sind zumindest einige der Horizontalelemente 142 als Auflagewinkel 146 ausgebildet.

In der Fig. 3 sind drei unterschiedliche Lagerbehälter 30, 30' und 30" gezeigt. Die Lagerbehälter 30, 30' und 30" weisen vorzugsweise eine identische Grundfläche auf, haben aber unterschiedliche Dimensionen in der Vertikalrichtung Y. Der Lagerbehälter 30 weist das größte Volumen auf. Der Lagerbehälter 30' weist ein mittleres Volumen auf. Der Lagerbehälter 30" weist das kleinste Volumen auf. Die in der Fig. 3 gezeigten Lagerbehälter 30-30" weisen jeweils eine Seitenwand 150 in Umfangsrichtung auf, die unten von einem jeweiligen Boden 152 begrenzt ist. Die Lagerbehälter 30-30" sind nach oben offen. Die Lagerbehälter 30-30" werden entlang der Querrichtung Z in das Regal 22 ein- und ausgelagert, wie es nachfolgend noch näher erläutert werden wird. Die Regale 22 können selbst mittels der RBG 50 umgesetzt werden. Dazu weist das Gestell 144 vorzugsweise (horizontale) Transportstreben 154 in einem oberen und/oder unteren Bereich des Regals 22 auf. Die Transportstreben 154 erstrecken sich in der Fig. 3 entlang der Längsrichtung X.

Es ist zu beachten, dass das Regal 22 der Fig. 3 unterfahrbar ausgebildet ist. Dies bedeutet, dass die RBG 50 mit ihren LAM 110 während einer Einlagerung oder Auslagerung der Lagerbehälter 30 geradeaus in das Regal 22 eindringen können. Die RBG 50 können insbesondere (in der negativen Z-Richtung) unter die unteren Transportstreben 154 gefahren werden.

Fig. 4 zeigt eine perspektivische Ansicht eines exemplarischen RBG 50.

In einem unteren Bereich des RBG 50 ist die Fahreinheit 128 angeordnet. In einem seitlich äußeren Bereich der Fahreinheit 128 ist der Mast 160 angeordnet, entlang dem sich das LAM 110 auf- und abbewegen kann, wie es in der Fig. 4 durch einen Doppelpfeil 164 angedeutet ist. Das LAM 110 weist einen, vorzugsweise starren, Greifmechanismus 162 auf. Der Greifmechanismus 162 ist z.B. U- oder C-förmig ausgebildet. Der Greifmechanismus 162 ist an die Lagerbehälter 130 angepasst. Der Greifmechanismus 162 kann die Lagerbehälter 30 außen seitlich starr umgreifen und die Lagerbehälter 30 zwischen seinen parallelen Schenkeln aufnehmen. Der Greifmechanismus 162 könnte auch ein mittiger Haken (nicht gezeigt) sein, der in eine Behälteröffnung (nicht gezeigt) seitlich oder frontal eingreift. Das LAM 110 ist in der Querrichtung Z vorzugsweise nicht beweglich, d.h. starr, ausgebildet. Somit baut das LAM 110 sehr simpel. Das LAM 110 kann alternativ auch einen Mechanismus aufweisen, der die Behälter 30 unterfährt (z.B. eine Platte), um die Behälter 30 aus- oder einzuheben.

Der in der Fig. 3 gezeigte Lagerbehälter 30 ruht mit seinem Rand 148 auf dem Greifmechanismus 162. Der Lagerbehälter 30 sitzt auf dem Greifmechanismus 162 in der Y-Richtung auf. Der Greifmechanismus 162 ist abgesehen von seiner vertikalen Beweglichkeit 164 vorzugsweise starr ausgebildet, um die Steuerung möglichst simpel zu halten. Die parallelen Schenkel des Greifmechanismus 162 sind insbesondere in der Querrichtung Z nicht verschieblich gelagert. Die Schenkel sind generell nicht relativ zueinander beweglich.

Es versteht sich, dass aber andere Typen von Lastaufnahmemitteln 110 eingesetzt werden können. Das LAM 110 kann z.B. durch eine horizontal entlang der Längsrichtung X der Fig. 4 orientierte Stange aufweisen, um z.B. Hängewaren aufzunehmen und zu bewegen. Alternativ kann das LAM 110 z.B. in Form eines Rollenförderers oder eines Zinken-Greifers ausgebildet sein, wie er exemplarisch in der Patentanmeldung DE 10 2010 054 968 A1 offenbart ist.

Um das LAM 110 in der Vertikalrichtung Y zu bewegen (vgl. Pfeil 164), wird das Hubwerk 108 (vgl. Fig. 2) verwendet. Das Hubwerk 108 sitzt im Bereich der Fahreinheit 128 und kann mit dem Fahrwerk 102 verbunden sein. Die Fahreinheit 128 kann ein Gehäuse 168 aufweisen, an dem der Mast 160 mit einer Nut 166 z.B. von außen angebracht ist. In diesem Fall steht der Mast in der Längsrichtung X gegenüber dem Gehäuse 168 über. Das LAM 110 ist vertikal verschieblich am Mast 160 gelagert. Innerhalb des Masts 160 kann ein Zugmittel vorgesehen sein, das mit dem LAM 110 verbunden ist, um das LAM 110 entlang der Nut 166 auf- und abzubewegen. Es versteht sich, dass auch Lösungen denkbar sind, bei dem der Mast 160 lediglich aus einer Oberseite 170 des Gehäuses 168 austritt.

Es versteht sich, dass die Fahreinheit 128 in der Richtung Y so hoch ausgebildet sein kann, dass sie unter das Regal 22 (vgl. Fig. 2) verfahrbar ist. Die Höhe der Fahreinheit 128 ist also vorzugsweise kleiner als eine Höhe, in der die untere Transportstrebe 154 des Regals 22 der Fig. 3 angebracht ist. Die Fahreinheit 128 kann ferner über eine weitere Hubplattform 172 im Bereich der Oberseite 170 verfügen, die durch eine Strichlinie 174 in der Fig. 4 angedeutet ist. Die weitere Hubplattform 172 kann eingesetzt werden, um die Regale 22 anzuheben und anschließend umzusetzen, d.h. an einem anderen Ort innerhalb des Systems 10 zu positionieren. Es versteht sich, dass die Hubplattform 172 entweder mit einem weiteren (nicht dargestellten) Hubwerk verbunden ist, oder über das bereits vorhandene Hubwerk 108 betätigbar ist.

Insbesondere in einem vorderen Bereich der Fahreinheit 128 sind die Sensoren 114 angeordnet. Die Sensoren 114 können zum einen zum Lesen der Marker 116 auf dem Boden (oder aus Regal) eingesetzt werden. Die Sensoren 114 können aber auch in alle anderen Richtungen eingesetzt werden, um Hindernisse zu erfassen. Die Sensoren 114 (Kameras, Scanner, etc.) melden z.B. Hindernisse an die Steuereinrichtung 100 (vgl. Fig. 2) zurück, so dass die Steuereinrichtung in einem Notfall die Fahrt des RBG 50 abbrechen, oder zumindest verlangsamen kann, um Unfälle zu vermeiden.

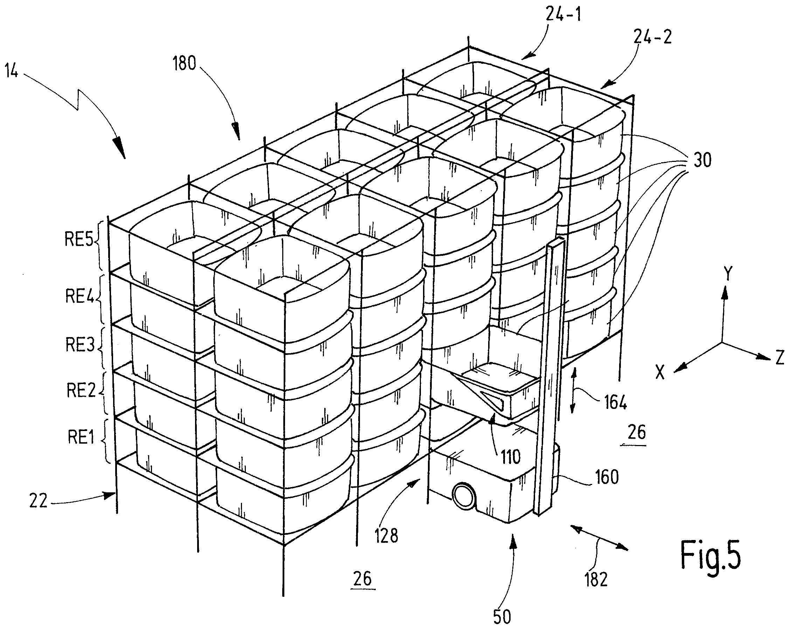

Fig. 5 zeigt eine perspektivische Ansicht eines Ausschnitts einer Lager-Zone 14, wie sie z.B. im System 10 der Fig. 1 zum Einsatz kommen kann.

Die Fig. 5 zeigt einen Regalblock 180, der aus zwei Regalreihen 24-1 und 24-2 gebildet ist, die Rücken an Rücken aufgestellt sind. Jeder Regalreihen 24-1 und 24-2 weist jeweils fünf (Einheits-)Regale 22 (mit vorzugsweise einheitlicher Grundfläche) auf, die hintereinander entlang der Längsrichtung X aufgereiht sind. Die Regale 22 sind mit (einheitlichen) Lagerbehältern 30 bestückt, die wiederum zur Bevorratung der Artikel 32 genutzt werden. Jedes der Regale 22 weist z.B. fünf Regalebenen RE1-RE5 auf. Jedes der Regale 22 ist unterfahrbar.

Ferner ist in der Fig. 5 ein RBG 50 gezeigt, das einen der Lagerbehälter 30 entweder gerade einlagert oder gerade auslagert, wie es durch einen Doppelpfeil 182 angedeutet ist. Während der Einlagerung oder der Auslagerung, wird das RBG 50 parallel zur Querrichtung Z der Regale 22 verfahren. Dies entspricht dann der Fahrtrichtung 54 des RBG 50 (vgl. Fig. 1 und Fig. 4). Das RBG 50 fährt normalerweise parallel zur Regalgasse 26, die sich parallel zur Längsrichtung X der Regale 22 erstreckt. Um unter das mittlere Regal 22 der Regalreihe 24-2 fahren zu können, verfügt das RBG 50 über ein (nicht dargestellten) Lenkmechanismus, der in der Fahreinheit 128 untergebracht ist. So ist es im RBG 50 möglich, seine Ausrichtung, die ursprünglich parallel zur Längsrichtung X orientiert ist, in die Z-Richtung zu ändern. Das LAM 110 wird in der vertikalen Richtung (vgl. Pfeil 164) in eine Höhe verbracht, die der Regalebene RE2 entspricht. Das LAM 110 wird dabei vertikal so eingestellt, dass es sich leicht unterhalb des Rands 148 befindet. Anschließend wird das RBG 50 in der negativen Z-Richtung unter das Regal 22 gefahren. Sobald das RBG 50 vollständig unter das Regal 22 verfahren ist und stoppt, wird das LAM 110 in der positiven Y-Richtung bewegt, um den Lagerbehälter 30 auszuheben. Dann kann das RBG 50 in der positiven Z-Richtung unter dem Regal 22 hervorfahren. Diese Situation ist in der Fig. 5 exemplarisch als Momentaufnahme gezeigt.

Es versteht sich, dass das RBG 50 im Wesentlichen vollständig unter das Regal 22 verfahrbar ist. Lediglich der Mast 160 befindet sich während einer einfach tiefen Ein- oder Auslagerung außerhalb des Regals 22. Die Fahreinheit 128 befindet sich jedoch im Wesentlichen vollständig unterhalb des Regals 22, so dass andere RBG 50 in der Regalgasse 26 (in der Längsrichtung X) passieren können, d.h. vorbeifahren können.

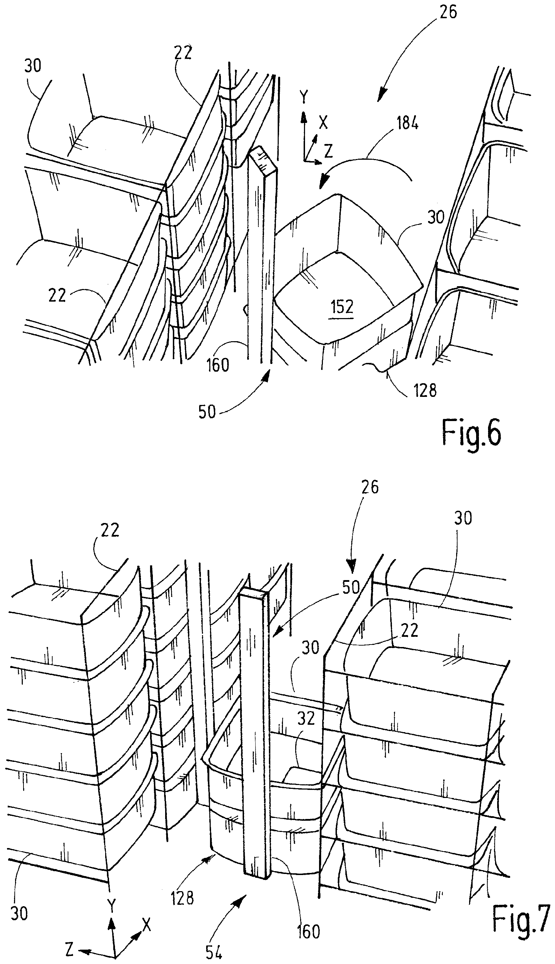

Figuren 6 und 7 zeigen perspektivische Ansichten in eine Regalgasse 26, in der ein RBG 50 einen Lagerbehälter 30 auslagert. Die Figuren 6 und 7 dienen zur Verdeutlichung einer Drehbewegung 184. Die Drehbewegung 184 findet in der Fig. 6 entgegen dem Uhrzeigersinn statt, bis das RBG 50 wieder parallel zur Längsrichtung X ausgerichtet ist. Dann kann das RBG 50 in der Fahrtrichtung 54 durch die Regalgasse 26 verfahren werden.

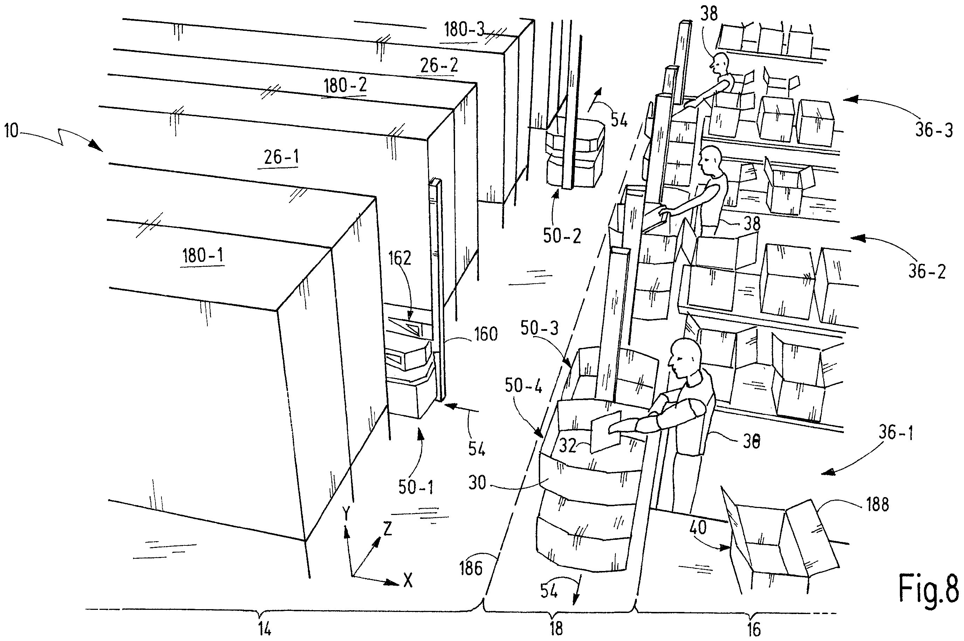

Fig. 8 zeigt eine perspektivische Ansicht eines Systems 10, wie es unter Bezugnahme auf die Fig. 1 beschrieben wurde.

Die Fig. 8 zeigt einen Teil der Lager-Zone 14 und einen Teil der Arbeits-Zone 16. Zwischen der Lager-Zone 14 und der Arbeits-Zone 16 erstreckt sich die Fahr-Zone 18 im Wesentlichen parallel zur Querrichtung Z der Regale 22. Die Kommissionierzone 14 ist mittels einer Hilfslinie 186 von der Fahr-Zone 118 getrennt. Die Hilfslinie 186 erstreckt sich parallel zur Querrichtung Z. Aus Gründen einer vereinfachten Darstellung sind lediglich mehrere Regalblöcke 180-1 bis 180-3, nicht jedoch die Regale 22 selbst gezeigt. In der Fig. 8 sind auch zwei Regalgassen 26-1 und 26-2 gezeigt, die sich in der Längsrichtung X erstrecken.

Die Arbeits-Zone 16 weist in der Fig. 8 drei Kommissionier-Arbeitsplätze 36-1 bis 36-3 auf, die jeweils von einem Kommissionierer 38 bedient werden. An den Kommissionier-Arbeitsplätzen 36 entnimmt der Kommissionierer 38 die Artikel 32 aus den Lagerbehältern 30. Dazu können die Anzeigen 120 (Fig. 2) verwendet werden. Die Lagerbehälter 30 werden von den RBG 50 in einer ergonomisch günstigen Höhe angedient, so dass sich die Kommissionierer 38 nicht bücken oder strecken müssen. Die RBG 50 durchfahren die Fahr-Zone 18 in der Fig. 8 in der negativen Z-Richtung. An jedem der Kommissionier-Arbeitsplätze 36 sind exemplarisch jeweils zwei RBG 50 gezeigt. An dem Kommissionier-Arbeitsplatz 36-1 sind z.B. die RBG 50-3 und 50-4 positioniert. Der Zentralrechner 80 (vgl. Fig. 1), der unter anderem für den Materialfluss innerhalb des Systems 10 verantwortlich ist, ist so eingerichtet, dass möglichst immer zumindest eines der RBG 50 im Bereich der Kommissionier-Arbeitsplätze 36 zwecks einer Entnahme einer der Artikel 32 bereitsteht. Der Zentralrechner 80 kann auch eine gewünschte Reihenfolge der RBG 50 vor den Kommissionier-Arbeitsplätzen 36 erzeugen. Im Unterschied zu einer konventionellen stationären Fördertechnik, die zum Andienen der Lagerbehälter 30 eingesetzt wird, können die RBG 50 sequenzieren, d.h. die Artikel 32 in eine gewünschte Reihenfolge bringen, bevor sie die Kommissionier-Arbeitsplätze 36 erreichen. Das RBG 50-2, das sich noch in der Lager-Zone 14 befindet, könnte z.B. hinter die RBG 50, die vor dem zweiten Kommissionier-Arbeitsplatz 36-2 positioniert sind, und vor den RBG 50 eingeschleust werden, die vor dem dritten Kommissionier-Arbeitsplatz 36-3 positioniert sind.

Die Kommissionierer 38 kommissionieren die Artikel 32 in Kartons 188. Die Kartons 188 werden hier als Auftragsbehälter 40 verwendet.

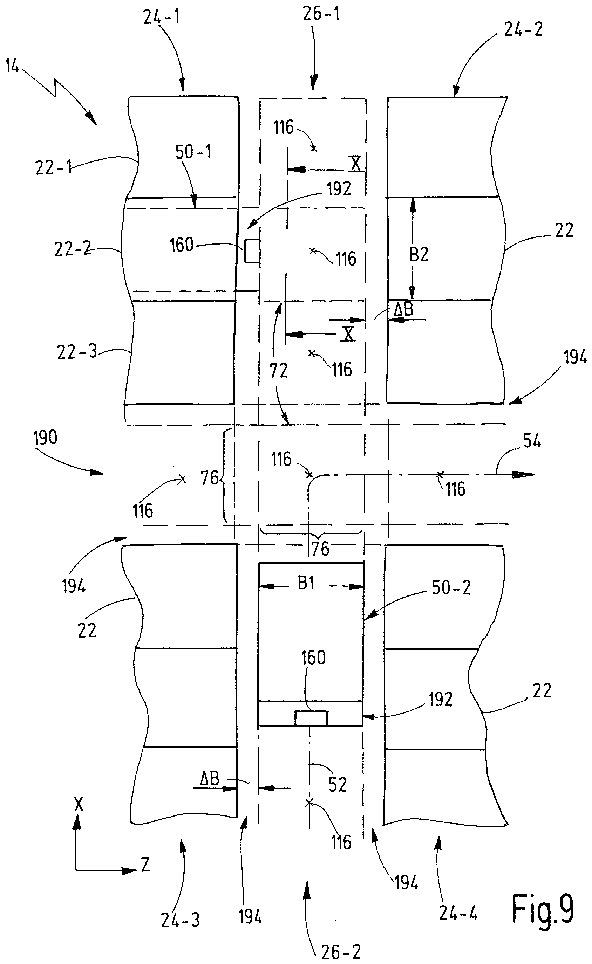

Fig. 9 zeigt eine Draufsicht eines Ausschnitts einer Lager-Zone 14 zur Verdeutlichung einer Navigation der RBG 50 zwischen den Regalen 22 sowie der Dimensionen.

In der Fig. 9 sind vier Regalreihen 24-1 bis 24-4 mit jeweils drei Regalen 22 gezeigt. Exemplarisch sind die Regale 22-1 bis 22-3 der ersten Regalreihen 24-1 näher bezeichnet. Die Regalgasse 26-1 erstreckt sich zwischen den Regalreihen 24-1 und 24-2 bzw. zwischen den Regalreihen 24-3 und 24-4 in der Längsrichtung X. Zwischen den Regalreihen 24 erstreckt sich parallel zur Querrichtung Z ein Quergang 190, der die gleichen Dimensionen wie die Regalgasse 26-1 aufweisen kann.

Ferner sind in der Fig. 9 zwei RBG 50-1 und 50-2 gezeigt. Das RBG 50-1 ist unter dem Regal 22-2 der ersten Regalreihe 24-1 geparkt. Das erste RBG 50-1 lagert gerade ein oder aus. Lediglich der Mast 160 ragt in einem Randbereich 192 des RBG 50-1 aus dem Regal 22-2 heraus. Eine Breite B1 der RBG 50 ist kleiner als eine Breite B2 der Regale 22. Die Breite B1 der RBG 50 ist exemplarisch gleich der Zellenbreite 76 gewählt. Eine Zelle 72 ist exemplarisch am Schnittpunkt der Regalgasse 26-1 mit dem Quergang 190 angedeutet.

Die Regalgassen und die Quergänge 190 sind üblicherweise etwas breiter als die Einheitszelle 72 ausgelegt, um es den RBG 50 zu ermöglichen, innerhalb der Regalgassen 26 zu drehen (vergleiche Fig. 6), Kurven zu fahren oder die Fahrtrichtung 54 zu wechseln, wie es exemplarisch für das zweite RBG 50-2 in Form des Fahrwegs 52 angedeutet ist. Das RBG 50-2 wechselt aus der Regalgasse 26-2 kommend in den Quergang 190 und kreuzt dabei die Zelle 72.

Die Zellen 72 in den Regalgassen 26 und die Quergänge 190, wobei es sich bei den Quergängen 190 auch um stirnseitige Randbereiche der Regalblöcke 180 handeln kann, weisen also quer zu ihrer Längserstreckung seitliche Manövrier- und Überholbereiche 194 auf. Die Bereiche 194 sind vorzugsweise auf beiden Seiten angeordnet und weisen jeweils eine Breite ΔB auf, die wesentlich kleiner als die Zellenbreite 76 ist. Die Breite ΔB ist aber so gewählt, dass die Randbereiche 192 der RBG 50 vollständig aufgenommen werden können, so dass z.B. das RBG 50-2 hinter dem RBG 50-1 in der Regalgasse 26-1 vorbeifahren kann, während sich das RBG 50-1 unterhalb des Regals 22-2 zwecks Ein- oder Auslagerung befindet. Dies ist nur möglich, weil die Ein- und Auslagerung in der Fahrtrichtung 54 erfolgt, und nicht quer dazu, wie im Stand der Technik üblich.

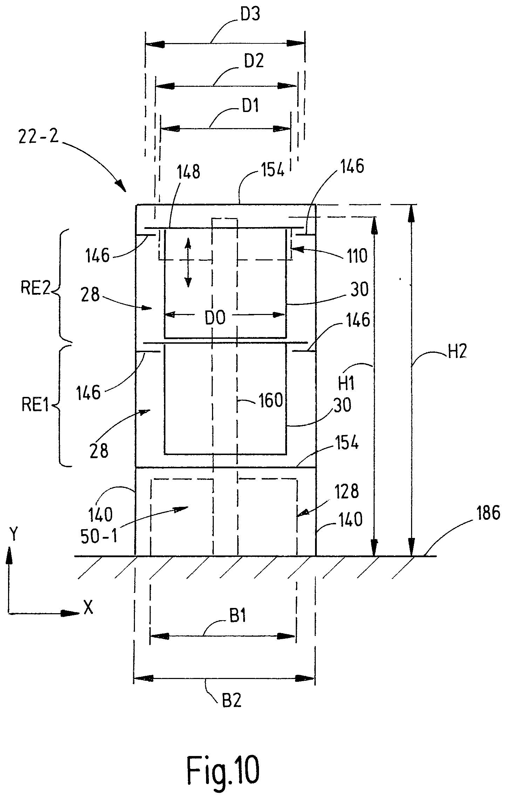

Die Fig. 10 dient der Verdeutlichung von Relativabmessungen. Fig. 10 zeigt eine frontale Ansicht des Regals 22-2 der Fig. 9, wobei das Regal 22-2 in isolierter Form gezeigt ist. Das Regal 22-2 steht auf dem (Hallen-)Boden 196, in oder auf dem auch die Marker 116 angebracht sind und auf dem das RBG 50-1 fährt. Das RBG 50-1 ist durch Strichlinien angedeutet.

Im Regal 22-2 sind zwei Lagerbehälter 30 in ihren jeweiligen Regalplätzen 28 gezeigt. Jeder der Lagerbehälter 30 sitzt mit seinem Rand 148 auf den Auflagewinkeln 146. Die Lagerbehälter 30 weisen in der X-Richtung eine Breite D0 auf. Das Lastaufnahmemittel 110 weist in der X-Richtung (zwischen seinen in der X-Richtung auskragenden Zinken des Greifmechanismus 162) (vergleiche Fig. 4 und 8) eine lichte Breite D1 auf. Ein lichter Abstand zwischen benachbarten Auflagewinkeln 146 ist mit D2 bezeichnet. Eine Breite des Rands 148 der Lagerbehälter 30 ist mit D3 bezeichnet. Es gilt das nachfolgende Größenverhältnis. D0 < D1 < D2 < D3. Der Greifmechanismus 162 des LAM 110 weist also eine Breite auf, so dass das LAM 110 in der vertikalen Richtung Y zwischen den benachbarten Auflagewinkeln 146 bewegt werden kann, um einen der Lagerbehälter 30 auszuheben oder abzusetzen.

Der Mast 160 weist vorzugsweise eine Höhe H1 auf, die kleiner als eine Höhe H2 des Regals 22-2 ist. Die Höhe H1 des Masts 160 wird immer dann kleiner als die Höhe H2 des Regals 22 gewählt, wenn die Lagerbehälter 30 mehrfach tief (in der Z-Richtung) hintereinander in einem Lagerplatz 28 bevorratet werden. In diesem Fall ist es erforderlich, dass das RBG 50 in der Z-Richtung in die Regale 22 hineinfahren kann. Üblicherweise werden die Regale 22 aber nur einfach tief bestückt.

Eine Breite B1 des RBG 50 in der X-Richtung ist geringer als eine Breite B2 des Regals 22, so dass das RBG 50 zwischen die Vertikalelemente 140 des Regals 22 passt, um unter das Regal 22-2 verfahrbar zu sein.

In der vorhergehenden Beschreibung wurde das System 10 exemplarisch mit einer Regalanordnung 20 beschrieben, die in einer einzigen Ebene liegt. Es versteht sich, dass die in der Fig. 1 gezeigte Struktur auch in mehreren Ebenen aufgebaut sein kann. Insbesondere kann sich die Regalanordnung 20 in der vertikalen Richtung mehrmals wiederholen. Die so gebildeten "Stockwerke" können hinsichtlich eines Materialflusses mittels Vertikalförderern, insbesondere mittels RBG-Vertikalförderern, miteinander verbunden sein. Ferner versteht es sich, dass die in der Fig. 1 gezeigte Struktur, die üblicherweise in einer Halle angeordnet ist, sich in der vertikalen Richtung Y n-fach in Form von Gebäudestockwerken wiederholen kann, wobei die Gebäudestockwerke wiederum über Vertikalförderer miteinander verbunden sind.

Ferner ist zu erwähnen, dass die RBG 50 nicht nur zum Ein- und Auslagern der Lagerbehälter 30 bzw. der Artikel 32 eingesetzt werden können, sondern dass mit dem RBG 50 auch Umlagerungen der Behälter 30 innerhalb der Regale 22 möglich sind. Auf diese Weise kann ein Artikelsortiment z.B. gemäß einer ABC-Verteilung über die Regale 22 verteilt werden. Sollte es zu einer Änderung der Verteilung kommen, so müssen die Regale 22 nicht umgesetzt werden. Es reicht aus, die Lagerbehälter 30 innerhalb der Regale 22 umzusetzen. Die Umsetzung, oder Umlagerung, der Lagerbehälter 30 kann innerhalb der Regalgassen 26 oder auch gassenübergreifend erfolgen. Die Verteilung der Artikel 32 über die Regale 22 erfolgt häufig in Abhängigkeit von Zugriffshäufigkeiten, wobei jedem Artikeltyp eine spezifische Zugriffshäufigkeit (benötigte Anzahl/Auftrag) zugeordnet ist.

Wie bereits oben erwähnt, ist es besonders bevorzugt, die Regale 22 alle identisch auszubilden. Dennoch ist es in diesem Fall möglich, unterschiedlich dimensionierte Lagerbehälter 30 in die Regale 22 einzulagern und aus den Regalen 22 auszulagern. Eine Anordnung der Lagerbehälter 30 innerhalb der Regale 22 lässt sich leicht und automatisch ändern, wie zuvor im Zusammenhang mit der Umsetzung bzw. Umlagerung beschrieben.

Üblicherweise weisen die Lagerbehälter 30 eine Tragfähigkeit von 40 kg auf. Natürlich ist es auch möglich, andere Lagerbehälter 30 einzusetzen, die eine höhere oder niedrigere Tragfähigkeit haben. Die RBG 50 tragen die Lagerbehälter 30 während Transportbewegungen zwischen den verschiedenen Zonen 12 in einer vorzugsweise abgesenkten Stellung, so dass ein gemeinsamer Schwerpunkt des RBG 50 und des Lagerbehälters 30 so tief wie möglich liegt. Dann ist es möglich, dass die RBG 50 mit hohen Geschwindigkeiten innerhalb des Systems 10 fahren können. Typische Geschwindigkeiten liegen im Bereich von 2 m/s. Derartig hohe Geschwindigkeiten sind auch deswegen möglich, weil die Lagerbehälter 30 formschlüssig im Greifmechanismus 162 liegen.

In der obenstehenden Beschreibung der Figuren hat man sich bei der Wahl der Orientierung des Koordinatensystems generell an die in der Intralogistik üblichen Bezeichnungen gehalten, so dass die Längsrichtung des Regals 22 mit X, die Tiefe des Regals 22 (bzw. die Querrichtung) mit Z und die (vertikale) Höhe des Regals 22 mit Y bezeichnet ist.

Des Weiteren wurden gleiche Teile und Merkmale mit gleichen Bezugszeichen versehen. Die in der Beschreibung enthaltenen Offenbarungen sind sinngemäß auf ähnliche Teile und Merkmale mit ähnlichen Bezugszeichen übertragbar. Lage- und Orientierungsangaben (z.B. "oben", "unten", "seitlich", "längs", "quer", "horizontal", "vertikal" und Ähnliches) sind auf die unmittelbar beschriebene Figur bezogen. Bei einer Änderung der Lage oder Orientierung sind diese Angaben aber sinngemäß auf die neue Lage bzw. Orientierung zu übertragen.

### Bezugszeichenliste:

- 10: System
- 12: Zonen
- 14: Lager-Zone
- 16: Arbeits-Zone
- 18: Fahr-Zone
- 20: Regalanordnung
- 22: Regal
- 24: (Regal-)Reihe
- 26: Regalgasse
- 28: Lagerplätze
- 30: Lagerbehälter
- 32: Artikel/Gebinde
- 34: Arbeitsplatz
- 36: Kommissionier-Arbeitsplatz
- 38: Kommissionierer
- 40: Auftragsbehälter
- 42: Auftragsbehälter-Fördertechnik
- 50: RBG (Regalbediengerät)
- 52: Fahrweg
- 54: Fahrtrichtung
- 56: möglicher Fahrweg
- 70: Zellenraster
- 71: Hilfslinien
- 72: (Einheits-)Zelle
- 74: Zellenmittelpunkt
- 76: Rasterweite/Zellenbreite
- 80: Host/Zentralrechner
- 82: Leitung
- 84: drahtlose Verbindung
- 100: Steuereinrichtung von 50
- 102: Fahrwerk
- 104: (Fahr-)Antrieb
- 106: (Fahr-)Controller
- 108: Hubwerk
- 110: LAM (Lastaufnahmemittel)
- 112: Schnittstellenverwaltung/ I/O
- 114: Sensor
- 116: Marker
- 118: Scanner
- 120: PbL-Anzeige
- 121: Energiespeicher
- 122: Energiequelle
- 124: Gestell
- 126: Räder
- 128: Fahreinheit
- 140: Vertikalelement/Pfosten
- 142: Horizontalelement/Streben
- 144: Gestell
- 146: Auflagewinkel
- 148: überkragender Rand von 30
- 150: Seitenwand von 30
- 152: Boden von 30
- 154: Transportstreben
- 160: Mast
- 162: zangenförmiger Greifer/Greifmechanismus
- 164: Hubbewegung
- 166: Nut in 160
- 168: Gehäuse von 128
- 170: Oberseite von 168
- 172: Hubplattform
- 174: Hilfslinie
- 180: Regalblock
- 182: Ein-/Auslagerung
- RE: Regalebene
- 184: Drehbewegung
- 186: Trennlinie
- 188: Karton
- 190: Quergang
- 192: Randbereich von 50
- 194: Manövrier- und Überholbereich

## Patentansprüche

1. Lager- und Kommissioniersystem (10) zum Lagern und Kommissionieren von Artikeln (32) gemäß einem Kommissionierauftrag in Auftragsbehälter (40), das aufweist:
eine Lager-Zone (14);
eine Arbeits-Zone (16), die benachbart zu der Lager-Zone (14) angeordnet ist;
ein Lager (20), das in der Lager-Zone (14) angeordnet ist und das eine Vielzahl von Regalen (22) aufweist, wobei die Regale (22) parallel zueinander in Reihen (24) angeordnet sind und mindestens eine Regalgasse (26) zwischen sich definieren, wobei jedes der Regale (22) eine Vielzahl von übereinander angeordneten Regalebenen (RE) mit Lagerplätzen (28) aufweist, wobei jeder der Lagerplätze (28) zur Bereitstellung mindestens eines Lagerbehälters (30) oder mindestens einem der Artikel (32) eingerichtet ist;
mindestens einen Kommissionier-Arbeitsplatz (34; 36), der in der Arbeits-Zone (16) angeordnet ist und der zum Transferieren der Artikel (32) in die Auftragsbehälter (40) eingerichtet ist;
eine Vielzahl von Markern (116), die verteilt in den Zonen (12) angeordnet sind; und
eine Vielzahl von autonom verfahrbaren Regalbediengeräten (50), wobei jedes der Regalbediengeräte (50) aufweist:
ein Lastaufnahmemittel (110), das angepasst ist, mindestens einen der Lagerbehälter (30) und/oder mindestens einen der Artikel (32) in einer Fahrtrichtung (54) des Regalbediengeräts (50) aus einem der Lagerplätze (28) auszulagern oder in einen der Lagerplätze (28) einzulagern;
eine bodennahe Fahreinheit (128) mit einem Fahrwerk (102) und mit einem Antrieb (104);
mindestens einen Sensor (114) zum Erfassen der Marker (116), die einen Fahrweg (52) definieren, entlang dem das Regalbediengerät (50) in der Fahrtrichtung (54) verfahrbar ist; und
einer Steuerrichtung (100), die in die Fahreinheit (128) integriert ist; und
wobei die Steuereinrichtung (100) eingerichtet ist, das Regalbediengerät (50) autonom innerhalb jeder der Zonen (12) und zwischen den Zonen (12) entlang eines frei wählbaren Fahrwegs (52) in der Fahrrichtung (54) zu verfahren,
**dadurch gekennzeichnet, dass** jedes der Regalbediengeräte (50) ferner aufweist:
einen vertikalen Mast (160), entlang dem das Lastaufnahmemittel (110), vorzugsweise ausschließlich, vertikal beweglich gelagert ist, wobei der Mast (160) mit dem Fahrwerk (102) verbunden ist und sich vertikal, vorzugsweise senkrecht, nach oben erstreckt; und
mindestens ein Hubwerk (108), das in die Fahreinheit (128) integriert ist, wobei die Fahreinheit (128) mit dem Mast verbunden ist und wobei das Hubwerk (108) eingerichtet ist, das Lastaufnahmemittel (110) entlang des Masts (160) auf und ab zu bewegen (164); und
dass die Fahreinheit (128) so dimensioniert ist und der Mast (160) so angeordnet ist, dass das Regalbediengerät (50-1) zwecks einer Ein- oder Auslagerung in der Fahrtrichtung (54) unter eines der Regale (22) verfahrbar ist, während ein anderes Regalbediengerät (50-2) an dem Regalbediengerät (50-1) in der Regalgasse (26) vorbeifahren kann, wobei die Fahreinheit (128), der Mast (160) und die das Lastaufnahmemittel (110) so relativ zueinander angeordnet sind, dass die Fahreinheit (128) eines der Regale (22) im Wesentlichen vollständig unterfährt und dass der Mast (160) außerhalb des einen Regals (22) verbleibt, während sich das Lastaufnahmemittel (110) zwecks einer Einlagerung oder Auslagerung im Wesentlichen vollständig innerhalb des einen Regals (22) befindet.

2. System nach Anspruch 1, wobei der Mast (160) in einem äußeren Randbereich (192) der Fahreinheit (128) angeordnet ist, insbesondere außen an der Fahreinheit (128) angebracht ist.

3. System nach einem der Ansprüche 1 bis 2, das ferner eine Fahr-Zone (18) aufweist, die die Lager-Zone (14) mit der Arbeits-Zone (16) verbindet.

4. System nach einem der Ansprüche 1 bis 3, wobei die Zonen (12) in ein Zellenraster (70) unterteilt sind, das eine flächendeckende regelmäßige Anordnung von, vorzugsweise rechteckigen, Zellen (72), insbesondere Einheitszellen, bildet, wobei die Regale (22) entlang des Zellenrasters (70) angeordnet und ausgerichtet sind.

5. System nach einem der Ansprüche 1 bis 4, wobei die Arbeits-Zone (16) eine Auftragsbehälter-Fördertechnik (42) aufweist, die mit dem oder den Arbeitsplätzen (34) verbunden ist.

6. System nach einem der Ansprüche 1 bis 5, wobei jedes der Regale (22) unterfahrbar und transportabel ausgebildet ist.

7. System nach Anspruch 6, wobei jedes der Regale (22) eingerichtet ist, mittels des Lastaufnahmemittels (110) angehoben und transportiert zu werden.

8. System nach Anspruch 6 oder 7, wobei die Fahreinheit (128) eine Hubplattform (172) aufweist, die mit einem weiteren Hubwerk verbunden ist, um jedes der Regale (22) innerhalb der Lager-Zone (14) durch Anheben und Absetzen von einer ersten Position an eine zweiten Position umzusetzen.

9. System nach einem der Ansprüche 1 bis 8, wobei das Lastaufnahmemittel (110) in der Fahrtrichtung (54) starr am vertikalen Mast (160) angebracht ist, so dass eine Ein- und Auslagerung nur durch eine Bewegung der Fahreinheit (128) in oder entgegengesetzt der Fahrtrichtung (54) möglich ist.

## Claims

1. A storage- und picking system (10) for storing and picking articles (32), in accordance with a picking order, into order containers (40) comprising:
a storage zone (14);
a working zone (16) arranged adjacent to the storage zone (14);
a warehouse (20) arranged in the storage zone (14) and comprising a plurality of racks (22), wherein the racks (22) are arranged in rows (24) parallel to each other and define at least one rack aisle (26) therebetween, wherein each of the racks (22) comprises a plurality of rack planes (RE), which are arranged on top of each other, having storing locations (28), wherein each of the storage locations (28) is configured to provide at least one storage container (30) or least one of the articles (32);
at least one picking-workstation(34; 36) arranged in the working zone (16) and being configured for transferring the articles (32) into the order containers (40);
a plurality of markers (116) arranged in a distributed manner in the zones (12); and
a plurality of storage and retrieval devices (50) travelling autonomously, wherein each of the storage and retrieval devices(50) comprises:
a load-handling device (110) adapted to retrieve at least one of the storage containers (30) and/or at least one of the articles (32) along a travelling direction (54) of the storage and retrieval device (50) from, or to store the same into, one of the storage locations (28);
a ground-near travelling unit (128) including a carrier (102) and a drive (104);
at least one sensor (114) for detecting the markers (116), which define a travelling path (52) along which the storage and retrieval device (50) can travel in the travelling direction (54); and
a controlling device (100) integrated into the travelling unit (128);
and
wherein the controlling device (100) is configured to drive the storage and retrieval device (50) autonomously within each of the zones (12) and between the zones (12) along a freely selectable travelling path (52) in the travelling direction (54),
**characterized in that** each of the storage and retrieval devices (50) further comprises:
a vertical mast (160) along which the load-handling device (110) is supported, preferably only, vertically movable, wherein the mast (160) is connected to the carrier (102) and extends vertically, preferably perpendicular, upwards; and
at least one hoisting device (108) integrated into the travelling unit (128), wherein the travelling unit (128) is connected to the mast, and wherein the hoisting device (108) is connected to the mast, and wherein the hoisting device (108) is configured to move the load-handling device (110) along the mast (160) upwards and downwards; and
that the travelling unit (128) is dimensioned and the mast (160) is arranged such that the storage and retrieval device (50-1) is movable for the sake of storage or retrieval in the travelling direction (54) beneath one of the racks (22) while another storage and retrieval device (50-2) passes the storage and retrieval device (50-1) in the rack aisle (26), wherein the travelling unit (128), the mast (160), and the load-handling device (110) are arranged relative to each other such that the travelling unit (128) travels substantially completely beneath one of the racks (22) and that the mast (160) remains outside of the one of the racks (22) while the load-handling device (110) is located, for the purpose of storage or retrieval, substantially completely within the one of the racks (22).

2. The system of claim 1, wherein the mast (160) is arranged in an outer peripheral region (192) of the travelling unit (128), in particular attached externally to the travelling unit (128).

3. The system of any of claims 1 to 2, which further comprises a travelling zone (18) connecting the storage zone (14) to the working zone (16).

4. The system of any of claims 1 to 3, wherein the zones (12) are divided according to a cellular grid (70), which forms a regular arrangement of, preferably rectangular, cells (72) in an area-covering manner, wherein the racks (22) are arranged and orientated along the cellular grid (70).

5. The system of any of claims 1 to 4, wherein the working zone (16) comprises an order-container conveying system (42) being connected to the work station or work stations (34).

6. The system of any of claims 1 to 5, wherein each of the racks (22) is formed such that it can be transported and one can travel beneath it.

7. The system of claim 6, wherein each of racks (22) is configured to be lifted and transported by means of the load-handling device (110).

8. The system of claim 6 or 7, wherein the travelling unit (128) comprises a hoisting platform (172) which is connected to a further hoisting device for transferring each of the racks (22) within the storage zone (14) from a first position to a second position by lifting and lowering.

9. The system of any of claims 1 to 8, wherein the load-handling device (110) is attached rigidly in the travelling direction (54) to the vertical mast (160) so that storage and retrieval is only possible by movement of the travelling unit (128) along or opposite to the travelling direction (54).

## Revendications

1. Système de stockage et de préparation des commandes (10) pour le stockage et la préparation de commandes d'articles (32) selon un ordre de prélèvement dans des récipients de préparation des commandes (40), qui présente :
une zone de stockage (14) ;
une zone de travail (16) qui est disposée à côté de la zone de stockage (14) ;
un entreposage (20) qui est disposé dans la zone de stockage (14) et qui présente une pluralité de rayonnages (22), les rayonnages (22) étant disposés parallèlement les uns aux autres en rangées (24) et définissant au moins une allée de rayonnages (26) entre eux, chacun des rayonnages (22) présentant une pluralité de plans de rayonnages (RE) disposés les uns au-dessus des autres avec des emplacements de stockage (28), chacun des emplacements de stockage (28) étant prévu pour fournir au moins un récipient de stockage (30) ou au moins l'un des articles (32) ;
au moins un poste de travail de préparation des commandes (34 ; 36) qui est disposé dans la zone de travail (16) et qui est prévu pour transférer les articles (32) dans le récipient de préparation des commandes (40) ;
une pluralité de marqueurs (116) qui sont disposés de manière répartie dans les zones (12) ; et
une pluralité d'appareils de commande de rayonnage (50) pouvant être déplacés de manière autonome, chacun des appareils de commande de rayonnage (50) présentant
un moyen de réception de charge (110) qui est prévu pour décharger au moins l'un des récipients de stockage (30) et/ou au moins l'un des articles (32) dans une direction de déplacement (54) de l'appareil de commande de rayonnage (50) hors de l'un des emplacements de stockage (28) ou pour le charger dans l'un des emplacements de stockage (28) ;
une unité de déplacement (128) proche du sol avec un châssis (102) et un entraînement (104) ;
au moins un capteur (114) pour détecter les marqueurs (116) qui définissent une voie de déplacement (52) le long de laquelle l'appareil de commande de rayonnage (50) peut être déplacé dans la direction de déplacement (54) ; et
une direction de commande (100) qui est intégrée dans l'unité de déplacement (128) ; et
le dispositif de commande (100) étant prévu pour déplacer l'appareil de commande de rayonnage (50) dans la direction de déplacement (54) de manière autonome à l'intérieur de chacune des zones (12) et entre les zones (12) le long d'une voie de déplacement (52) pouvant être sélectionnée librement,
**caractérisé en ce que** chacun des appareils de commande de rayonnage (50) présente en outre :
un mât vertical (160) le long duquel le moyen de réception de charge (110) est supporté de manière déplaçable de préférence exclusivement verticalement, le mât (160) étant relié au châssis (102) et s'étendant verticalement, de préférence perpendiculairement vers le haut ; et
au moins un mécanisme de levage (108) qui est intégré dans l'unité de déplacement (128), l'unité de déplacement (128) étant raccordée au mât et le mécanisme de levage (108) étant prévu pour déplacer de haut en bas (164) le moyen de réception de charge (110) le long du mât (160) ; et
l'unité de déplacement (128) étant dimensionnée de telle sorte, et le mât (160) étant disposé de telle sorte, que l'appareil de commande de rayonnage (50-1) puisse être déplacé en vue d'un déchargement ou d'un chargement dans la direction de déplacement (54) en dessous de l'un des rayonnages (22) tandis qu'un autre appareil de commande de rayonnage (50-2) peut passer devant l'appareil de commande de rayonnage (50-1) dans l'allée de rayonnages (26), l'unité de déplacement (128), le mât (160) et le les moyens de réception de charge (110) étant disposés les uns par rapport aux autres de telle sorte que l'unité de déplacement (128) passe en dessous de l'un des rayonnages (22) essentiellement complètement et que le mât (160) reste à l'extérieur de l'un des rayonnages (22), tandis que le moyen de réception de charge (110) se trouve essentiellement complètement à l'intérieur de l'un des rayonnages (22) en vue d'un chargement ou d'un déchargement.

2. Système selon la revendication 1, dans lequel le mât (160) est disposé dans une région de bord extérieure (192) de l'unité de déplacement (128), en particulier est monté à l'extérieur sur l'unité de déplacement (128).

3. Système selon l'une quelconque des revendications 1 et 2, présentant en outre une zone de déplacement (18) qui relie la zone de stockage (14) à la zone de travail (16).

4. Système selon l'une quelconque des revendications 1 à 3, dans lequel les zones (12) sont divisées en un quadrillage de cellules (70) qui forme, sur toute la surface, un agencement régulier de cellules (72) de préférence rectangulaires, en particulier de cellules unitaires, les rayonnages (22) étant disposés et orientés le long du quadrillage de cellules (70).

5. Système selon l'une quelconque des revendications 1 à 4, dans lequel la zone de travail (16) présente une technique de transport des récipients de préparation des commandes (42), qui est associée au poste ou aux postes de travail (34).

6. Système selon l'une quelconque des revendications 1 à 5, dans lequel chacun des rayonnages (22) est réalisé de manière transportable et de manière à permettre le passage en-dessous de celui-ci.

7. Système selon la revendication 6, dans lequel chacun des rayonnages (22) est prévu pour être soulevé et transporté au moyen du moyen de réception de charge (110).

8. Système selon la revendication 6 ou 7, dans lequel l'unité de déplacement (128) présente une plate-forme de levage (172) qui est raccordée à un mécanisme de levage supplémentaire afin de transférer chacun des rayonnages (22) à l'intérieur de la zone de stockage (14), par soulèvement et abaissement, d'une première position à une deuxième position.

9. Système selon l'une quelconque des revendications 1 à 8, dans lequel le moyen de réception de charge (110) est monté dans la direction de déplacement (54) rigidement sur le mât vertical (160) de telle sorte qu'un chargement et un déchargement ne soient possibles que par un déplacement de l'unité de déplacement (128) dans la direction de déplacement (54) ou dans la direction opposée.
